# DEMANDE DE BREVET EUROPEEN

(11) **EP 3 578 253 A1**
(43) Date de publication de la demande: **11.12.2019**
(21) Numéro de dépôt: 19175753.3
(22) Date de dépôt: 21.05.2019
(51) Int. Cl.: B01J 8/08, B01J 8/18, B01J 8/26, B01J 8/44, B01J 4/00, B01J 8/00, B01J 8/24

(54) **DISPOSITIF DE DISTRIBUTION DE MELANGE POLYPHASIQUE DANS UNE ENCEINTE COMPORTANT UN MILIEU FLUIDISE**

(30) Priorité: 06.06.2018 FR 1854921
(71) Demandeur: IFP Energies nouvelles, 92852 Rueil-Malmaison Cedex (FR)
(72) Inventeur: AMBLARD, Benjamin, 92852 RUEIL-MALMAISON CEDEX (FR); TEBIANIAN, Sina, 92852 RUEIL-MALMAISON CEDEX (FR); RAYNAL, Ludovic, 92852 RUEIL-MALMAISON CEDEX (FR); GAUTHIER, Thierry, 92852 RUEIL-MALMAISON CEDEX (FR); LE COZ, Jean-François, 78100 SAINT GERMAIN EN LAYE (FR)

(57) **Abrégé**

Dispositif de distribution de phase fluide légère (2) dans une phase lourde (4) à l'état fluidisé dans une enceinte réactionnelle (5), comprenant : une conduite (1) pour transporter la phase fluide légère ; des premières et deuxièmes fenêtres (7 et 8) percées dans la conduite, les deuxième fenêtres s'ouvrant dans l'enceinte réactionnelle ; et des branches (6) prolongeant chaque première fenêtre et se divisant en : un passage central débouchant dans l'enceinte réactionnelle à travers une fenêtre intermédiaire (9) percée dans la paroi supérieure de la branche (6) ; et au moins deux branches latérales distinctes formant deux passages latéraux (10) débouchant dans l'enceinte réactionnelle à travers des fenêtres d'extrémité de branche (11).

## Description

### Domaine technique

La présente description s'inscrit dans l'amélioration du design des distributeurs pour la distribution d'une phase fluide, en général légère, dans une enceinte réactionnelle contenant une phase fluide, en général dense. Généralement, dans le contexte des lits fluidisés, la phase fluide légère est une phase gaz, gaz-solide, gaz-liquide, liquide ou liquide-solide, et la phase fluide dense est le lit fluidisé lui-même, c'est-à-dire la suspension de particules solides dispersées dans du gaz et/ou du liquide.

Dans le cas où l'enceinte réactionnelle est un lit fluidisé, qui contient une phase solide (catalytique ou non), maintenue en suspension à l'état de pseudo-fluide par le passage d'un fluide gazeux, liquide, d'un mélange de fluides gaz et liquide, ou d'un pseudo-fluide constitué de gaz ou de liquide contenant des particules en suspension, la distribution a pour rôle essentiel de maintenir la fluidisation du solide dans l'enceinte réactionnelle tout en assurant un bon mélange de l'ensemble des phases permettant ainsi d'avoir une bonne homogénéité des produits au sein du lit fluidisé.

Il est donc capital d'assurer une bonne distribution des phases fluides à leur entrée dans l'enceinte réactionnelle. C'est d'autant plus important dans le cas où une réaction chimique se produit dans le lit fluidisé car on cherche alors à éviter tout by-pass ou toute zone morte, néfastes au procédé.

### Etat de l'art

Le brevet US5571482 décrit un distributeur de gaz disposé en haut d'un réacteur à lit fluidisé à co-courant gaz-solide ascendant (« riser » selon la terminologie anglo-saxonne) dans un régénérateur, comprenant un couvercle en forme de champignon muni d'orifices et comprenant des encoches sur le rebord du couvercle.

Le brevet FR3006607 décrit un distributeur de phase légère dans une phase dense comprenant un moyen de déflection disposé sur la surface externe du couvercle.

Le brevet US5156817 décrit un distributeur muni d'une pluralité de bras de distribution à section triangulaire et dont les bords inférieurs sont dentelés.

Le brevet US6221318 décrit un distributeur muni d'une pluralité de bras de distribution présentant différentes terminaisons.

### Résumé

Dans le contexte précédemment décrit, un premier objet de la présente invention est de fournir des dispositifs de distribution permettant une meilleure distribution d'une première phase fluide (*i.e.,* phase légère) dans une enceinte réactionnelle contenant une deuxième phase fluide (*i.e.,* phase lourde) ayant une densité plus grande que la phase fluide légère à distribuer. Cette différence de densité peut être due soit à une fraction volumique de solide soit à une fraction volumique de liquide de la phase à injectée inférieure à celle de la phase contenue dans la capacité où les phases doivent être mélangées. Un deuxième objet de la présente invention est de fournir des dispositifs de distribution permettant un meilleur mélange entre les phases et des meilleures performances de réaction.

Selon un premier aspect, les objets précités, ainsi que d'autres avantages, sont obtenus par un dispositif de distribution d'une phase fluide légère au sein d'une phase lourde dans une enceinte réactionnelle contenant la dite phase lourde (e.g. à l'état fluidisé),
le dispositif comprenant :
une conduite pour le transport de la phase fluide légère vers l'enceinte réactionnelle, la conduite étant notamment adaptée pour déboucher dans l'enceinte réactionnelle ;
des premières fenêtres et des deuxièmes fenêtres percées dans une paroi latérale de la conduite, les deuxième fenêtres s'ouvrant directement dans l'enceinte réactionnelle ; et
des branches prolongeant chaque première fenêtre dans un axe de branche sensiblement perpendiculaire à l'axe de symétrie de la conduite,
dans lequel chaque branche se divise, dans un plan sensiblement orthogonal à l'axe de symétrie de la conduite, en :
un passage central débouchant dans l'enceinte réactionnelle à travers une fenêtre intermédiaire percée dans une paroi supérieure de la branche ; et
au moins deux branches latérales distinctes formant deux passages latéraux débouchant dans l'enceinte réactionnelle à travers des fenêtres d'extrémité de branche.

Selon un ou plusieurs modes de réalisation, les premières fenêtres sont adaptées de sorte qu'une première portion de la phase fluide légère distribuée sur la périphérie de l'enceinte réactionnelle sorte par les premières fenêtres avec une première vitesse, les deuxièmes fenêtres sont adaptées de sorte qu'une deuxième portion de la phase fluide légère distribuée sur la partie centrale de l'enceinte réactionnelle sorte par les deuxièmes fenêtres avec une deuxième vitesse, les sections de passages des premières et deuxièmes fenêtres sont formées de telle manière que la première vitesse et la deuxième vitesse soient comprises entre 0,1×V et 30×V, V désignant la vitesse de ladite phase fluide légère dans la conduite et étant comprise entre 1 m/s et 100 m/s.

Selon un ou plusieurs modes de réalisation, les fenêtres intermédiaires sont adaptées de sorte qu'une partie centrale de la première portion de la phase fluide légère soit distribuée à une position intermédiaire de l'enceinte réactionnelle et sorte par les fenêtres intermédiaires avec une troisième vitesse, les fenêtres d'extrémité de branche sont adaptées de sorte que des parties latérales de la première portion de la phase fluide légère soient distribuées à une position extérieure de l'enceinte réactionnelle et sortent par les fenêtres d'extrémité de branche avec une quatrième vitesse, les sections de passages des fenêtre intermédiaire et des fenêtres d'extrémité de branche sont formées de telle manière que la troisième vitesse et la quatrième vitesse soient comprise entre 0,5×V2 et 3×V2, V2 étant la deuxième vitesse.

Selon un ou plusieurs modes de réalisation, les branches sont de longueur a comprise entre 0,1×D et 0,5×D, D étant le diamètre de l'enceinte réactionnelle.

Selon un ou plusieurs modes de réalisation, les premières et deuxièmes fenêtres sont disposées de manière alternée, et/ou sont en nombre pairs, et/ou sont de même nombre, pour assurer notamment une symétrie de l'écoulement.

Selon un ou plusieurs modes de réalisation, la largeur de la section de passage constituée par la branche augmente de façon linéaire, courbe ou crénelée à partir de la conduite.

Selon un ou plusieurs modes de réalisation, la largeur des branches est augmentée à partir de la conduite dans l'axe de branche selon deux angles α sur une distance f, l'angle α étant compris entre 0° et 60°, la distance f étant comprise entre 0×a et 1×a, a étant la longueur des branches.

Selon un ou plusieurs modes de réalisation, la hauteur de la section de passage constituée par la branche diminue de façon linéaire, courbe ou crénelée à partir de la conduite.

Selon un ou plusieurs modes de réalisation, la hauteur des branches est réduite à partir de la conduite dans l'axe de branche avec un angle β sur une distance f, l'angle β étant compris entre 0° et 85°, la distance f étant comprise entre 0×a et 1×a, a étant la longueur des branches.

Selon un ou plusieurs modes de réalisation, dans lequel la distance b dans l'axe de branche entre la conduite et une paroi centrale divisant la branche en ledit passage central et lesdits passages latéraux, est comprise entre 0,1×a et 0,9×a, a étant la longueur des branches. Selon un ou plusieurs modes de réalisation, la fenêtre intermédiaire est placée en bordure de la paroi centrale.

Selon un deuxième aspect, les objets précités, ainsi que d'autres avantages, sont obtenus par un réacteur comprenant un dispositif de distribution selon le premier aspect.

Selon un ou plusieurs modes de réalisation, le réacteur comprenant un seul dispositif de distribution. Selon un ou plusieurs modes de réalisation, le réacteur comprenant une pluralité de dispositifs de distribution.

Selon un troisième aspect, les objets précités, ainsi que d'autres avantages, sont obtenus par un procédé de craquage catalytique à deux zones de régénération utilisant le dispositif de distribution selon le premier aspect, pour réaliser le passage d'un catalyseur d'une première zone de régénération à une deuxième zone de régénération en lit fluidisé turbulent.

Selon un ou plusieurs modes de réalisation, les conditions réactionnelles de la première zone de régénération sont les suivantes :
température : entre 600°C et 750°C ;
pression : entre 0,15 MPag et 0,3 MPag ;
vitesse superficielle gaz : entre 0,5 m/s et 1,5 m/s ;
catalyseur FCC (matrice silice-alumine avec zéolite et additif) ;
« charge » régénérateur : catalyseur coké (coke formé de carbone, hydrogène, azote et souffre).

Selon un ou plusieurs modes de réalisation, les conditions réactionnelles de la deuxième zone de régénération sont les suivantes :
température : entre 690°C et 750°C ;
pression : entre 0,1 MPag et 0,3 MPag ;
vitesse superficielle gaz : entre 0,5 m/s et 1,5 m/s ;
catalyseur FCC (matrice silice-alumine avec zéolite et additif) ;
« charge » régénérateur : catalyseur coké (coke formé de carbone, hydrogène, azote et souffre).

Selon un quatrième aspect, les objets précités, ainsi que d'autres avantages, sont obtenus par un procédé de traitement de biomasse utilisant le dispositif de distribution selon le premier aspect, pour réaliser l'introduction d'une phase gaz, ou d'une suspension gaz solide dans un milieu fluidisé, par exemple dans un réacteur de pyrolyse catalytique, par exemple réaliser l'introduction d'hydrogène et/ou de particules solides dans un milieu fluidisé contenant des particules solides.

Selon un ou plusieurs modes de réalisation, les conditions réactionnelles dans le réacteur de pyrolyse catalytique sont les suivantes :
température : entre 500°C et 650°C ;
pression : entre 0,5 MPag et 0,7 MPag ;
vitesse superficielle gaz : entre 0,3 m/s et 1,5 m/s ;
catalyseur matrice silice-alumine avec additif ;
charge solide : biomasse.

Selon un cinquième aspect, les objets précités, ainsi que d'autres avantages, sont obtenus par un procédé d'hydrotraitement de coupes pétrolières lourdes utilisant le dispositif de distribution selon le premier aspect, pour réaliser l'introduction d'hydrogène dans un milieu fluidisé contenant des particules solides (e.g. catalyseur) et optionnellement une phase hydrocarbure lourde à traiter.

Selon un ou plusieurs modes de réalisation, les conditions réactionnelles dans le réacteur de pyrolyse catalytique sont les suivantes :
température : entre 390°C et 460°C ;
pression : entre 15 MPag et 20 MPag ;
vitesse superficielle gaz : entre 2 cm/s et 8 cm/s ;
vitesse superficielle liquide : entre 2 cm/s et 8 cm/s ;
catalyseur H-oil™ (e.g. métal du groupe VI et métal du groupe VIII sur alumine) ;
charge : résidu atmosphérique et/ou résidu sous vide.

Les groupes d'éléments chimiques sont donnés selon la classification CAS (CRC Handbook of Chemistry and Physics, éditeur CRC press, rédacteur en chef D.R. Lide, 81ème édition, 2000-2001). Par exemple, le groupe VIII selon la classification CAS correspond aux métaux des colonnes 8, 9 et 10 selon la nouvelle classification IUPAC.

Des modes de réalisation selon les aspects référencés ci-dessus ainsi que d'autres caractéristiques et avantages des dispositifs et procédés selon les aspects précités vont apparaître à la lecture de la description qui va suivre, donnée à titre uniquement illustratif et non limitatif, et en référence aux dessins suivants.

### Brève description des dessins

La figure 1 est une vue schématique d'un réacteur comprenant un dispositif de distribution selon des modes de réalisation de la présente description.
Les figures 2a, 2b sont des vues schématiques d'une conduite du dispositif de distribution selon des modes de réalisation de la présente description.
La figure 3 est une vue schématique des branches d'un dispositif de distribution selon des modes de réalisation de la présente description.
Les figures 4a, 4b et 4c sont des vues schématiques d'une branche d'un dispositif de distribution selon des modes de réalisation de la présente description.
Les figures 5a, 5b, 5c et 5d sont des vues schématiques des passages latéraux d'une branche d'un dispositif de distribution selon des modes de réalisation de la présente description.
Les figures 6a et 6b sont des visualisations issues de simulations 3D montrant la dispersion d'un fluide introduit dans l'enceinte réactionnelle au moyen d'un dispositif de référence et d'un dispositif de distribution selon des modes de réalisation de la présente description, respectivement.

Généralement, les éléments semblables sont dénotés par des références identiques dans les figures.

### Description détaillée

Le dispositif de distribution selon la présente description peut se définir comme un dispositif pour la distribution d'une phase fluide légère au sein d'une phase lourde (*i.e*., mélange de fluides à densité plus élevée) dans une enceinte réactionnelle contenant la dite phase lourde, par exemple à l'état fluidisé.

La phase fluide légère peut être une phase gaz, gaz-solide, gaz-liquide, liquide ou liquide-solide. Selon un ou plusieurs modes de réalisation, la phase fluide légère est une phase gaz-solide ou liquide-solide. Selon un ou plusieurs modes de réalisation, la phase fluide légère est une phase gaz-solide.

La phase lourde peut être une émulsion gaz-solide ou même un milieu triphasique gaz-solide-liquide, comme par exemple dans les procédés d'hydrotraitement de coupes pétrolières. Selon un ou plusieurs modes de réalisation, le rapport de masse volumique entre la phase lourde et la phase légère est compris entre 1.1 et 5000.

Le dispositif de distribution selon la présente description est notamment adapté à la distribution d'une phase fluide légère dans un réacteur en lit fluidisé, tel qu'un réacteur en lit fluidisé bouillonnant triphasique dans lequel le catalyseur solide est fluidisé par un mélange de fluides réactifs comprenant un gaz et un liquide. Le dispositif de distribution selon la présente description est particulièrement adapté pour distribuer une phase gaz-solide ou gaz-liquide à haute température dans un réacteur à lit fluidisé. C'est par exemple le cas de la régénération étagée de catalyseur dans le procédé de conversion de résidu FCC R2R™ où le catalyseur subit une première étape de régénération dans un réacteur en lit fluidisé, puis une deuxième étape de régénération dans un réacteur en lit fluidisé, dans lequel le catalyseur est très préférablement distribué de façon homogène sur l'ensemble de la section du deuxième étage de régénération, notamment pour favoriser des réactions de combustion et limiter les différences de température.

Le dispositif de distribution selon la présente description est particulièrement bien adapté lorsque la phase fluide légère comprend de l'hydrogène, et quand la phase fluide dense comprend un résidu pétrolier, notamment pour une mise en oeuvre dans une étape d'hydroconversion en lit bouillonnant utilisant un réacteur fluidisé triphasique.

Dans le cadre du procédé de craquage catalytique à deux étages de régénération, le dispositif de distribution selon la présente description peut être utilisé pour transférer le catalyseur d'une première zone de régénération dans une deuxième zone de régénération en lit fluidisé turbulent.

Dans le cadre d'un procédé de traitement de la biomasse, le dispositif de distribution selon la présente description peut être utilisé pour introduire une phase gaz, ou une suspension gaz-solide dans le milieu fluidisé du réacteur de traitement de la biomasse.

Dans le cadre d'un procédé d'hydrotraitement de coupes pétrolières lourdes, le dispositif de distribution selon la présente description peut être utilisé pour introduire de l'hydrogène dans un milieu fluidisé contenant des particules de catalyseur et une phase hydrocarbure lourde à traiter.

Plus généralement, le dispositif de distribution selon la présente description peut être utilisé dans :
- les réacteurs de procédé de craquage catalytique en lit fluidisé (noté FCC en abrégé),
- les réacteurs de régénération de catalyseurs, par exemple de craquage catalytique (e.g. FCC),
- les réacteurs comprenant un lit fluidisé de catalyseurs,
- les réacteurs d'hydrotraitement ou d'hydrocraquage fonctionnant en écoulement ascendant avec une entrée d'un flux diphasique gaz-liquide ou gaz-solide dans le fond de l'enceinte réactionnelle,
- les réacteurs de type « slurry » (*i.e*., comprenant une phase solide dispersée dans un fluide),
- les stripeurs, sécheurs, aérateurs ou humidificateurs, et
- les réacteurs de pyrolyse catalytique.

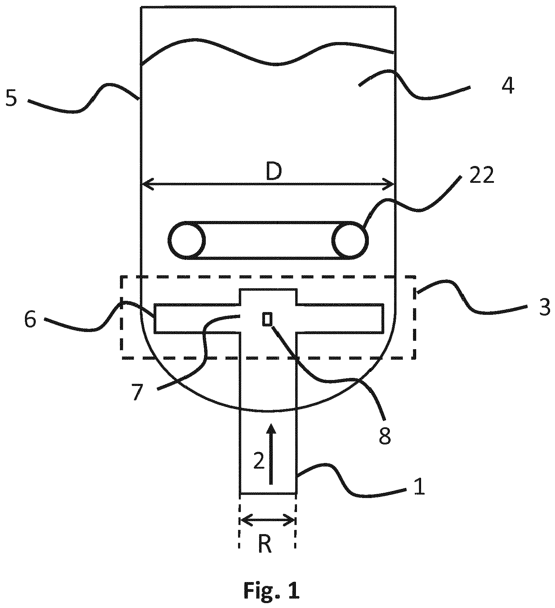

Plus précisément, en référence à la figure 1, le dispositif de distribution selon la présente description comprend une conduite 1 de diamètre R adaptée pour pénétrer dans la partie inférieure de l'enceinte réactionnelle 5 contenant la phase lourde 4 à l'état fluidisé, et adaptée pour transporter avec une vitesse V la phase fluide légère 2 vers l'enceinte réactionnelle 5.

Selon un ou plusieurs modes de réalisation, le dispositif de distribution est installé dans une enceinte réactionnelle 5 de diamètre D compris entre 0,5 m et 50 m, de préférence entre 1 m et 30 m et de manière préférée entre 2m et 20 m.

Selon un ou plusieurs modes de réalisation, le dispositif de distribution est utilisé pour distribuer la phase fluide légère 2 dans l'enceinte réactionnelle 5 au-dessous ou en dessous d'un injecteur de gaz 22 qui peut avoir la forme d'un anneau.

Selon un ou plusieurs modes de réalisation, la conduite 1 est cylindrique.

Selon un ou plusieurs modes de réalisation, l'extrémité supérieure de la conduite 1 est sensiblement centrée selon l'axe de symétrie (i.e., axe central vertical) de l'enceinte réactionnelle 5.

Selon un ou plusieurs modes de réalisation, la conduite 1 est verticale. La conduite 1 est préférentiellement verticale si elle transporte une phase fluide légère 2 multiphasique.

Selon un ou plusieurs modes de réalisation, le rapport du diamètre R de la conduite 1 sur le diamètre D de l'enceinte réactionnelle 5 est compris entre 0,005 et 0,9, de préférence entre 0,01 et 0,5 et de manière préférée entre 0,1 et 0,3.

Sur la partie supérieure de la conduite 1 aussi appelée tube d'admission, sont percées/ouvertes des premières fenêtres 7 et des deuxièmes fenêtres 8 dans la paroi latérale de ladite conduite 1.

Sur la partie supérieure de la conduite 1, un distributeur 3 est également disposé pour distribuer la phase fluide légère 2 à différentes positions radiales dans l'enceinte réactionnelle 5.

Le distributeur 3 comprend une pluralité de branches 6 (appelés aussi conduits latéraux) prolongeant chacune des premières fenêtres 7 à partir de la conduite 1 dans un axe de branche sensiblement perpendiculaire à l'axe de symétrie de la conduite 1.

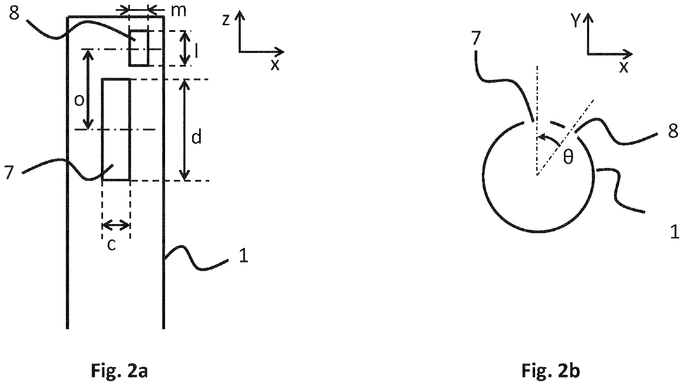

En référence aux figures 2a et 2b, selon un ou plusieurs modes de réalisation, les premières fenêtres 7 et/ou les deuxièmes fenêtres 8 sont de formes sensiblement rectangulaires, les premières fenêtres 7 ayant une largeur c et une hauteur d (soit une section de passage c×d), les deuxièmes fenêtres 8 ayant une largeur m et une hauteur l (soit une section de passage mxl). Il est entendu que les premières fenêtres 7 et/ou les deuxièmes fenêtres 8 peuvent être des ouvertures de forme quelconque (e.g. carré, triangle, cercle, etc...).

Selon un ou plusieurs modes de réalisation, les premières et deuxièmes fenêtres 7 et 8 sont disposées de manière alternée. Selon un ou plusieurs modes de réalisation, les premières et deuxièmes fenêtres 7 et 8 sont en nombres pairs en total et/ou de même nombre.

Selon un ou plusieurs modes de réalisation, le nombre de premières fenêtres 7 et/ou de deuxièmes fenêtres 8 est compris entre 2 et 48, de préférence entre 4 et 24 et de manière préférée entre 4 et 12.

Selon un ou plusieurs modes de réalisation, les centres des premières et deuxièmes fenêtres 7 et 8 sont séparés d'une distance o sur l'axe de symétrie z de la conduite 1 et/ou décalés d'un angle θ dans le plan orthogonal xy à l'axe de symétrie z de la conduite 1.

Selon un ou plusieurs modes de réalisation, l'angle θ est compris entre 0° et 180° et de manière préférée entre 0° et 90°.

Selon un ou plusieurs modes de réalisation, les premières fenêtres 7 sont disposées en-dessous des deuxièmes fenêtres 8 sur l'axe de symétrie z.

Selon un ou plusieurs modes de réalisation, la distance o sur l'axe de symétrie z entre le centre des premières et deuxièmes fenêtres 7 et 8 est comprise entre 0×d et 2×d et de manière préférée entre 0×d et 1×d.

Selon un ou plusieurs modes de réalisation, la distance o sur l'axe de symétrie z entre le centre des premières et deuxièmes fenêtres 7 et 8 est comprise entre 0×d et 1×d et les premières et deuxièmes fenêtres 7 et 8 sont disposées de manière alternée sur la conduite 1.

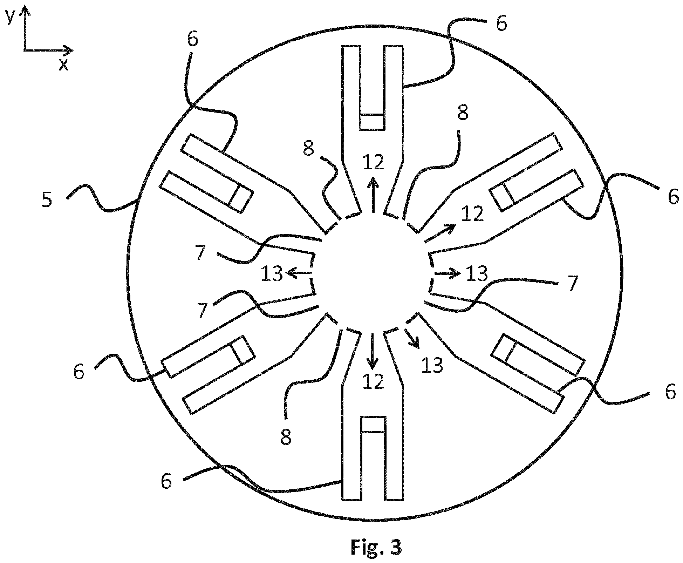

En référence à la figure 3, les branches 6 permettent de distribuer une première portion 12 de la phase fluide légère 2 sur la périphérie de l'enceinte réactionnelle 5. Les deuxièmes fenêtres 8 s'ouvrent directement dans l'enceinte réactionnelle 5, permettant notamment de distribuer une deuxième portion 13 de la phase fluide légère 2 sur la partie centrale de l'enceinte réactionnelle 5.

Selon un ou plusieurs modes de réalisation, les premières et deuxièmes fenêtres 7 et 8 sont adaptées de sorte que la première portion 12 sorte par les premières fenêtres 7 avec une première vitesse V1 pour se diriger ensuite vers les branches 6 et la deuxième portion 13 sorte directement dans l'enceinte réactionnelle 5 par les deuxièmes fenêtres 8 avec une deuxième vitesse V2.

Selon un ou plusieurs modes de réalisation, les sections de passages des premières et deuxièmes fenêtres 7 et 8 sont formées de telle manière que la première vitesse V1 et la deuxième vitesse V2 soient comprises entre 0,1×V et 30×V, de préférence entre 0,3×V et 20×V et de manière préférée entre 0,5×V et 10×V, V désignant la vitesse de ladite phase fluide légère dans la conduite 1 et étant comprise entre 1 m/s et 100 m/s et préférentiellement comprise entre 3 m/s et 30 m/s.

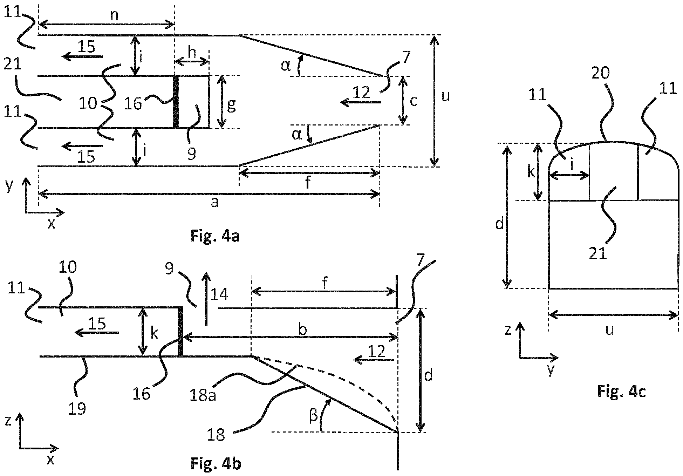

En référence aux figures 4a, 4b et 4c, chaque branche 6 comprend une paroi centrale 16 sensiblement perpendiculaire à l'axe de branche x et divisant la branche 6 en trois passages dans un plan orthogonal xy à l'axe de symétrie z de la conduite 1, dont un passage central débouchant dans l'enceinte réactionnelle 5 à travers une fenêtre intermédiaire 9 percée dans la paroi supérieure de la branche 6 et dont deux branches latérales distinctes (notées ci-après passages latéraux 10), disposées de part et d'autre du passage central de longueur n débouchant dans l'enceinte réactionnelle 5 à travers des fenêtres d'extrémité de branche 11. Selon un ou plusieurs modes de réalisation, la longueur n est comprise entre 0,1×a et 0,9×a et de manière préférée entre 0,4×a et 0,8×a.

Ainsi, la première portion 12 de la phase fluide légère 2 est divisée en trois parties dont une partie centrale 14 dirigée vers le passage central et deux parties latérales 15 dirigées vers les deux passages latéraux 10. Selon un ou plusieurs modes de réalisation, le dispositif comprend des passages latéraux 10 supplémentaires, par exemple de sorte que la première portion 12 de la phase fluide légère 2 puisse être divisée en 5 parties ou plus. Selon un ou plusieurs modes de réalisation, le passage central forme une branche centrale distincte des branches latérales (par exemple, au moyen de deux parois verticales, chaque paroi verticale étant disposée entre la branche centrale et une branche latérale).

Le dispositif de distribution selon la présente description ainsi défini permet l'injection de la phase fluide légère 2 dans l'enceinte réactionnelle 5 selon trois positions différentes sur le plan orthogonal xy à l'axe de symétrie z de la conduite 1 ce qui permet une meilleure répartition de la phase fluide légère 2 comparé au champignon classique. Une meilleure répartition de la phase fluide légère 2 dans l'enceinte 5 permet d'obtenir un meilleur mélange entre les phases et de meilleures performances de réactions.

Les trois positions d'injections sont : une position centrale proche de la conduite 1 à travers les deuxièmes fenêtres 8, une position intermédiaire à travers les fenêtres intermédiaires 9, et une position extérieure à travers les fenêtres d'extrémité de branche 11.

La répartition de la phase fluide légère 2 à travers les différentes positions est réglée à travers le dimensionnement des tailles des fenêtres 7, 8, 9 et 11.

Selon un ou plusieurs modes de réalisation, les branches 6 sont de longueur a comprise entre 0,1×D et 0,5×D et de manière préférée entre 0,2×D et 0,5×D.

Selon un ou plusieurs modes de réalisation, la section de passage constituée par la branche 6 est constante ou variable.

Selon un ou plusieurs modes de réalisation, la section de passage constituée par la branche 6 varie de façon linéaire, courbe ou crénelée à partir de la conduite 1.

Selon un ou plusieurs modes de réalisation, la largeur de la section de passage constituée par la branche 6 augmente de façon linéaire, courbe ou crénelée à partir de la conduite 1.

Selon un ou plusieurs modes de réalisation, dans un plan orthogonal xy à l'axe de symétrie z de la conduite 1, les branches 6 sont de largeur c au niveau de la première fenêtre 7 de la conduite 1 et de largeur u à une distance f de la première fenêtre 7, u étant supérieur à c.

Selon un ou plusieurs modes de réalisation, la distance f est comprise entre 0×a et 1×a et de manière préférée entre 0,1×a et 0,6×a.

Selon un ou plusieurs modes de réalisation, la largeur des branches 6 (sur plan orthogonal xy à l'axe de symétrie z de la conduite 1) augmente à partir de la conduite 1 dans l'axe de branche x selon deux angles α sur la distance f, par exemple pour éviter un changement soudain de largeur des branches 6. Par exemple, la largeur des branches 6 peut varier de c (largeur des premières fenêtres 7) à c+2×f×tan(α).

Selon un ou plusieurs modes de réalisation, l'angle α est compris entre 0° et 60°, de préférence entre 0° et 30° et de manière préférée entre 0° et 20°.

Selon un ou plusieurs modes de réalisation, la section inférieure des branches 6 est fermée.

Selon un ou plusieurs modes de réalisation, la hauteur de la section de passage constituée par la branche 6 diminue de façon linéaire, courbe ou crénelée à partir de la conduite 1. Selon un ou plusieurs modes de réalisation, la hauteur des branches 6 est réduite à partir de la conduite 1 dans l'axe de branche x, formant par exemple une paroi inférieure 18 avec un angle β sur la distance f, l'angle β étant formé entre l'axe de branche x et la paroi inférieure 18.

Selon un ou plusieurs modes de réalisation, l'angle β est compris entre 0° et 85°, de préférence entre 15° et 75° et de manière préférée entre 30° et 70°.

Selon un ou plusieurs modes de réalisation, la paroi centrale 16 de la branche 6 est de forme sensiblement rectangulaire, de largeur g et de hauteur k et est située à une distance b de la conduite 1 selon l'axe de branche x. Il est entendu que la paroi centrale 16 peut être une paroi de forme quelconque (e.g. carré, triangle, cercle, etc...).

Selon un ou plusieurs modes de réalisation, la paroi centrale 16 a une largeur g comprise entre 0,1×u et 0,9×u, de préférence entre 0,15×u et 0,8×u et de manière préférée entre 0,3×u et 0,6×u.

Selon un ou plusieurs modes de réalisation, la hauteur k de la paroi centrale 16 est choisie de sorte que la vitesse V4 des parties latérales 15 soit comprise entre 0,5×V2 et 3×V2, de préférence entre 0,9×V2 et 2×V2.

Selon un ou plusieurs modes de réalisation, la distance b entre la paroi centrale 16 et la conduite 1 est comprise entre 0,1×a et 0,9×a et de manière préférée entre 0,4×a et 0,8×a.

Selon un ou plusieurs modes de réalisation, la fenêtre intermédiaire 9 est de forme sensiblement rectangulaire, de longueur h sur l'axe de branche de la conduite 1 et de largeur g (soit une section de passage g×h). Il est entendu que la fenêtre intermédiaire 9 peut être une ouverture de forme quelconque (e.g. carré, triangle, cercle, etc...).

Selon un ou plusieurs modes de réalisation, la longueur h de la fenêtre intermédiaire 9 sur l'axe de branche x est définie de sorte que la vitesse V3 de la partie centrale 14 soit comprise entre 0,5×V2 et 3×V2, et de préférence entre 0,9×V2 et 2×V2. Selon un ou plusieurs modes de réalisation, la longueur h est comprise entre 0,2×g et 5×g et de manière préférée entre 0,5×g et 2×g.

Selon un ou plusieurs modes de réalisation, la fenêtre intermédiaire 9 est placée en bordure de la paroi centrale 16, permettant notamment à la partie centrale 14 de la première portion 12 de la phase fluide légère 2, bloquée par la paroi centrale 16, de sortir vers l'enceinte réactionnelle 5 avec une vitesse V3 à une position intermédiaire de la branche 6 dans le plan orthogonal xy à l'axe de symétrie z de la conduite 1.

Selon un ou plusieurs modes de réalisation, la paroi inférieure 18 de la branche 6 et/ou des parois inférieures 19 des passages latéraux 10 sont munies d'une ouverture, notamment pour faciliter l'installation d'un réfractaire à l'intérieur des branches 6 et/ou des passages latéraux 10 et de permettre l'évacuation du catalyseur dans les phases d'arrêt de l'unité.

Selon un ou plusieurs modes de réalisation, la paroi inférieure 18 de la branche 6 est de forme arrondie 18a, améliorant notamment l'introduction de la première portion 12 de la phase fluide légère 2 dans les branches 6. Par exemple, l'intérieur de la paroi inférieure 18 de la branche 6 peut être de forme convexe.

Selon un ou plusieurs modes de réalisation, les branches 6 comprennent des parois supérieures 20 de forme arrondie, améliorant notamment la résistance mécanique du distributeur 3. Par exemple, l'intérieur des parois supérieures 20 peut être de forme convexe.

Selon un ou plusieurs modes de réalisation, l'espace 21 entre les passages latéraux 10 est au moins partiellement plein, améliorant notamment la résistance mécanique du distributeur 3.

Selon un ou plusieurs modes de réalisation, les fenêtres d'extrémité de branche 11 sont de forme sensiblement rectangulaire de hauteur k et de largeur i (soit une section de passage k×i), permettant notamment aux parties latérales 15 de la première portion 12 de la phase fluide légère 2 de sortir vers l'enceinte réactionnelle 5 avec une vitesse V4. Il est entendu que les fenêtres d'extrémité de branche 11 peuvent être des ouvertures de forme quelconque (e.g. carré, triangle, cercle, etc...).

Selon un ou plusieurs modes de réalisation, la largeur i des passages latéraux 10 est sensiblement égale à la longueur u moins la longueur g, le tout divisé par 2. Selon un ou plusieurs modes de réalisation, la hauteur k des passages latéraux 10 est comprise entre 0,2×i et 5×i et de manière préférée entre 0,5×i et 2×i.

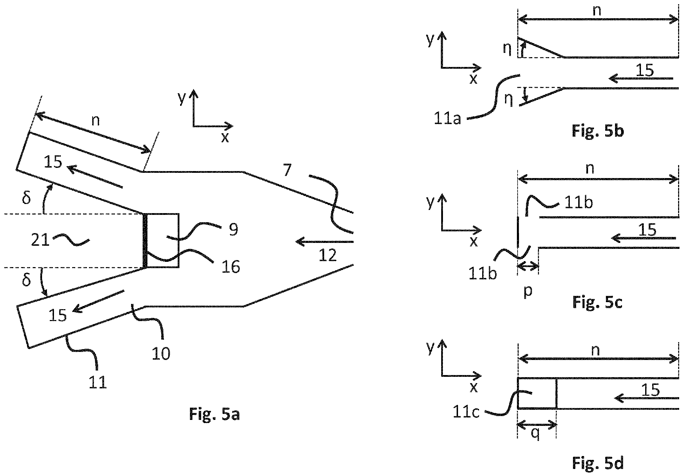

En référence aux figures 5a, 5b, 5c et 5d, selon un ou plusieurs modes de réalisation, les passages latéraux 10 ont une orientation définie par un angle δ par rapport à l'axe de branche x dans le plan orthogonal xy à l'axe de symétrie z.

Selon un ou plusieurs modes de réalisation, l'angle δ, définissant l'orientation des passages latéraux 10 par rapport à l'axe de branche x dans le plan orthogonal xy à l'axe de symétrie z, est compris entre 0° et 60°, de préférence entre 0° et 45° et de manière préférée entre 0° et 25°.

Selon un ou plusieurs modes de réalisation, les passages latéraux 10 sont équipés d'un élargissement en leur extrémité, tel qu'un élargissement d'un angle η sur une longueur prédéterminée, permettant notamment au fluide passant par la fenêtre d'extrémité de branche 11a d'être ralenti, par exemple en fonction de la valeur de l'angle η.

Selon un ou plusieurs modes de réalisation, l'angle η, définissant l'élargissement de l'extrémité des passages latéraux 10, est compris entre 0° et 80°, de préférence entre 0° et 45° et de manière préférée entre 0° et 25°.

Selon un ou plusieurs modes de réalisation, les passages latéraux 10 sont équipés d'au moins une ou deux fenêtres d'extrémité de branche latérales 11b.

Selon un ou plusieurs modes de réalisation, les fenêtres d'extrémité de branche latérales 11b sont de longueur p sur l'axe de branche x.

Selon un ou plusieurs modes de réalisation, la longueur p des fenêtres d'extrémité de branche latérales 11b est choisie de sorte que la vitesse V4 des parties latérales 15 soit comprise entre 0,5×V2 et 3×V2, de préférence entre 0,9×V2 et 2×V2.

Selon un ou plusieurs modes de réalisation, les fenêtres d'extrémité de branche 11c sont localisées sur la partie supérieure les passages latéraux 10.

Selon un ou plusieurs modes de réalisation, les fenêtres d'extrémité de branche 11c sont de longueur q sur l'axe de branche x.

Selon un ou plusieurs modes de réalisation, la longueur q des fenêtres d'extrémité de branche 11c est choisie de sorte que la vitesse V4 des parties latérales 15 soit comprise entre 0,5×V2 et 3×V2, de préférence entre 0,9×V2 et 2×V2.

Selon un ou plusieurs modes de réalisation, le distributeur 3 est surmonté sur sa partie supérieure d'un pommeau convexe (non représenté), notamment pour améliorer la distribution de la deuxième portion 13 sortant directement dans la partie centrale de l'enceinte réactionnelle 5 par les deuxièmes fenêtres 8.

Selon un ou plusieurs modes de réalisation, le pommeau convexe est traversé par les branches 6 qui débordent au-delà de la circonférence dudit pommeau.

Selon un ou plusieurs modes de réalisation, le diamètre du pommeau est compris entre 0,05×D et 0,95×D, de préférence compris entre 0,2×D et 0,8×D, et de manière encore préférée, compris entre 0,25×D et 0,75×D.

Selon un ou plusieurs modes de réalisation, le pommeau convexe présente des encoches régulièrement réparties tout au long de son bord inférieur.

Selon un ou plusieurs modes de réalisation, les encoches sont de forme sensiblement triangulaire ou rectangulaire. Il est entendu que encoches peuvent être des ouvertures de forme quelconque (e.g. carré, cercle, etc...).

Selon un ou plusieurs modes de réalisation, les encoches sont sensiblement rectangulaires, leur largeur étant comprise entre 0,01×F et 0,9×F, et leur hauteur étant comprise entre 0,01×F et 0,9×F, F étant la hauteur de la partie inférieure du pommeau.

Selon un ou plusieurs modes de réalisation, les encoches sont sensiblement triangulaires, la hauteur du triangle étant comprise entre 0,01×F et 0,9×F et la base du triangle étant comprise entre 0,01×F et 0,9×F, F étant la hauteur de la partie inférieure du pommeau.

Selon un ou plusieurs modes de réalisation, le pommeau est muni d'orifices sur sa cloche supérieure, lesdits orifices ayant par exemple un diamètre compris entre 1 et 100 mm, préférentiellement compris entre 10 et 50 mm.

### Exemples

Les exemples ci-dessous correspondent à un dispositif de référence et un dispositif de distribution selon la présente description. Le tableau 1 ci-dessous présente les conditions opératoires et les dimensions du dispositif de référence et du dispositif de distribution selon la présente description.

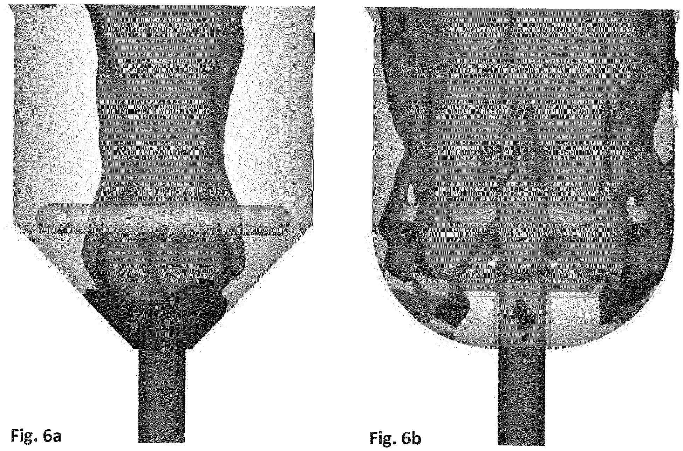

Des simulations de mécanique des fluides numériques (CFD pour « computational fluid dynamics » selon la terminologie anglaise) en trois dimensions du dispositif de référence d'une part, et du dispositif de distribution selon la présente description d'autre part, ont été effectuées et sont visualisées respectivement au moyen des figures 6a et 6b.

Les figures 6a et 6b présentent le parcours de la phase fluide légère 2 à distribuer dans la phase lourde 4 provenant du conduit 1, respectivement dans le cas du dispositif de référence (figure 6a), et dans le cas du dispositif de distribution selon la présente description (figure 6b). Pour cela, l'iso volume du pourcentage de gaz provenant de la conduite 1 dans la phase gaz totale entre 10% et 100% est tracé.

Avec le dispositif selon la présente description, la distribution de la phase fluide légère 2 provenant du conduit 1 est meilleure avec une couverture de la majorité de l'enceinte réactionnelle 5. La phase fluide légère 2 occupe environ 80% du volume au-dessus du distributeur 3 contre 30% pour le dispositif de référence.

Ainsi la phase fluide légère 2 est bien dispersée et interagit plus efficacement avec la phase lourde 4 ce qui améliore les performances de l'enceinte réactionnelle comparé avec le dispositif de référence.

**Tableau 1**

| CONDUITE | |
|---|---|
| Diamètre conduite 1 (m) | 1,25 |

| ENCEINTE REACTIONNELLE | |
|---|---|
| Diamètre enceinte réactionnelle 5 (m) | 8 |

| CONDITIONS OPERATOIRES | |
|---|---|
| Masse volumique particules (kg/m³) | 1450 |
| Diamètre moyen particule (microns) | 70 |
| Masse volumique gaz (kg/m³) | 0,9 |
| Gaz dans conduite 1 / gaz total dans enceinte réactionnelle 5 (%) | 50 |

| DISTRIBUTEUR DE REFERENCE | |
|---|---|
| Diamètre pommeau (m) | 3,2 |
| Nombre de fenêtres total | 8 |
| Nombre de trous | 95 |
| Diamètre trous (mm) | 100 |

| DISPOSITIF SELON LA PRESENTE DESCRIPTION | |
|---|---|
| Nombres de premières fenêtres 7 | 4 |
| Nombres de deuxièmes fenêtres 8 | 8 |
| Surface deuxièmes fenêtres 8 / surfaces totales des fenêtres 7+8 (%) | 8 |
| Longueur a (m) | 2,7 |
| Angle α (°) | 15 |
| Angle β (°) | 30 |
| Angle δ (°) | 0 |
| Angle η (°) | 0 |
| Longueur f (m) | 1,1 |
| Longueur b (m) | 1,6 |
| Longueur u (m) | 0,7 |
| Longueur g (m) | 0,3 |

## Revendications

1. Dispositif de distribution d'une phase fluide légère (2) au sein d'une phase lourde (4) dans une enceinte réactionnelle (5) contenant la dite phase lourde (4),
le dispositif comprenant :
une conduite (1) pour le transport de la phase fluide légère (2) vers l'enceinte réactionnelle (5) ;
des premières fenêtres (7) et des deuxièmes fenêtres (8) percées dans une paroi latérale de la conduite (1), les deuxième fenêtres (8) s'ouvrant directement dans l'enceinte réactionnelle (5) ; et
des branches (6) prolongeant chaque première fenêtre (7) dans un axe de branche (x) sensiblement perpendiculaire à l'axe de symétrie (z) de la conduite (1),
dans lequel chaque branche (6) se divise, dans un plan sensiblement orthogonal (xy) à l'axe de symétrie (z) de la conduite (1), en :
un passage central débouchant dans l'enceinte réactionnelle (5) à travers une fenêtre intermédiaire (9) percée dans une paroi supérieure de la branche (6) ; et
au moins deux branches latérales distinctes formant deux passages latéraux (10) débouchant dans l'enceinte réactionnelle (5) à travers des fenêtres d'extrémité de branche (11).

2. Dispositif de distribution selon la revendication 1, dans lequel :
les premières fenêtres (7) sont adaptées de sorte qu'une première portion (12) de la phase fluide légère (2) soit distribuée sur la périphérie de l'enceinte réactionnelle (5) et sorte par les premières fenêtres (7) avec une première vitesse (V1),
les deuxièmes fenêtres (8) sont adaptées de sorte qu'une deuxième portion (13) de la phase fluide légère (2) soit distribuée sur la partie centrale de l'enceinte réactionnelle (5) et sorte par les deuxièmes fenêtres (8) avec une deuxième vitesse (V2),
les sections de passages des premières et deuxièmes fenêtres (7, 8) sont formées de telle manière que la première vitesse (V1) et la deuxième vitesse (V2) soient comprises entre 0,1×V et 30×V, V désignant la vitesse de ladite phase fluide légère (2) dans la conduite (1) et étant comprise entre 1 m/s et 100 m/s.

3. Dispositif de distribution selon la revendication 2, dans lequel :
les fenêtres intermédiaires (9) sont adaptées de sorte qu'une partie centrale (14) de la première portion (12) de la phase fluide légère (2) soit distribuée à une position intermédiaire de l'enceinte réactionnelle (5) et sorte par les fenêtres intermédiaires (9) avec une troisième vitesse (V3),
les fenêtres d'extrémité de branche (11) sont adaptées de sorte que des parties latérales (15) de la première portion (12) de la phase fluide légère (2) soient distribuées à une position extérieure de l'enceinte réactionnelle (5) et sortent par les fenêtres d'extrémité de branche (11) avec une quatrième vitesse (V4),
les sections de passages des fenêtres intermédiaires (9) et des fenêtres d'extrémité de branche (11) sont formées de telle manière que la troisième vitesse (V3) et la quatrième vitesse (V4) soient comprises entre 0,5×V2 et 3×V2, V2 étant la deuxième vitesse (V2).

4. Dispositif de distribution selon l'une quelconque des revendications précédentes, dans lequel les branches (6) sont de longueur a comprise entre 0,1×D et 0,5×D, D étant le diamètre de l'enceinte réactionnelle (5).

5. Dispositif de distribution selon l'une quelconque des revendications précédentes, dans lequel les premières et deuxièmes fenêtres (7, 8) sont disposées de manière alternée, et/ou sont en nombre pairs, et/ou sont de même nombre.

6. Dispositif de distribution selon l'une quelconque des revendications précédentes, dans lequel la largeur de la section de passage constituée par la branche (6) augmente de façon linéaire, courbe ou crénelée à partir de la conduite (1).

7. Dispositif de distribution selon l'une quelconque des revendications précédentes, dans lequel la largeur des branches (6) est augmentée à partir de la conduite (1) dans l'axe de branche (x) selon deux angles α sur une distance f, l'angle α étant compris entre 0° et 60°, la distance f étant comprise entre 0×a et 1×a, a étant la longueur des branches (6).

8. Dispositif de distribution selon l'une quelconque des revendications précédentes, dans lequel la hauteur de la section de passage constituée par la branche (6) diminue de façon linéaire, courbe ou crénelée à partir de la conduite (1).

9. Dispositif de distribution selon l'une quelconque des revendications précédentes, dans lequel la hauteur des branches (6) est réduite à partir de la conduite (1) dans l'axe de branche (x) avec un angle β sur une distance f, l'angle β étant compris entre 0° et 85°, la distance f étant comprise entre 0×a et 1×a, a étant la longueur des branches (6).

10. Dispositif de distribution selon l'une quelconque des revendications précédentes, dans lequel la distance b dans l'axe de branche (x) entre la conduite (1) et une paroi centrale (16) divisant la branche (6) en ledit passage central et lesdits passages latéraux (10), est comprise entre 0,1×a et 0,9×a, a étant la longueur des branches (6).

11. Dispositif de distribution selon l'une quelconque des revendications précédentes, dans lequel la fenêtre intermédiaire (9) est placée en bordure de la paroi centrale (16).

12. Réacteur comprenant un dispositif de distribution selon l'une quelconque des revendications 1 à 11.

13. Procédé de craquage catalytique à deux zones de régénération utilisant le dispositif de distribution selon l'une des revendications 1 à 11, pour réaliser le passage d'un catalyseur d'une première zone de régénération à une deuxième zone de régénération en lit fluidisé turbulent.

14. Procédé de traitement de biomasse utilisant le dispositif de distribution selon l'une des revendications 1 à 11, pour réaliser l'introduction d'une phase gaz, ou d'une suspension gaz solide dans un milieu fluidisé.

15. Procédé de traitement selon la revendication 14, pour réaliser l'introduction d'hydrogène et/ou de particules solides dans un milieu fluidisé contenant des particules solides.
